# EUROPEAN PATENT SPECIFICATION

(11) **EP 1 609 678 B1**
(45) Date of publication and mention of the grant of the patent: **18.04.2007**
(21) Application number: 05380136.1
(22) Date of filing: 23.06.2005
(51) Int. Cl.: B60R 9/06

(54) **Rear luggage carrier for vehicles**
Hecktragvorrichtung für Fahrzeuge
Port-bagage arrière pour véhicules

(30) Priority: 23.06.2004 ES 200401532 U
(43) Date of publication of application: 28.12.2005
(73) Proprietor: Saez Mesas, Luis, 08400 Barcelona (ES)
(72) Inventor: Saez Mesas, Luis, 08400 Barcelona (ES)
(74) Representative: PROPI, S.L.

(56) References cited:
- DE-A1- 4 242 266
- GB-A- 2 353 507
- GB-A- 2 393 430
- US-A- 3 650 443
- US-A- 4 906 015
- US-A- 5 586 702

## Description

### OBJECT OF THE INVENTION

The present invention refers to a rear luggage carrier for vehicles, these being cars, vans, off-road vehicles, etc., the luggage carrier being provided so that it uses in its coupling the classic towing hitch assembled in one way or another on automotive vehicles, the luggage carrier being cantilever suspended backwards, being able to support objects such as bicycles, crates, etc.

The luggage carrier is materialised in a support capable of directly receiving any object considered as luggage, or rather receive an integrally attached container which houses said luggage, a container which if suitably fitted can allow carrying animals, such as dogs, in the case of hunters.

### BACKGROUND OF THE INVENTION

The applicant is proprietor of Spanish Utility Models with application numbers 9501540 and 9801082, in which as many automobile luggage carriers are disclosed, capable of being used in any of the aforementioned cases, based in both cases on a support fixed on the bar finishing in a towing ball for trailers, caravans and the like assembled on some vehicles, such that a structure based on two longitudinal beams with a crossbeam on one of the ends is removably fixed to that support duly fixed to the rear vehicle ball, arranged on which crossbeam there is a conventional hitch element coupling to the rear vehicle ball, whereas between the longitudinal beams a framework is assembled formed by two arms carrying the coupling element coupling onto the support duly secured on the bar of the rear vehicle ball, this framework forming an angle with the longitudinal beam structure, which angle is variable.

A rear luggage carrier according to the preamble of claim 1 is known from De 4242266.

### DESCRIPTION OF THE INVENTION

The luggage carrier set forth has as a first novel feature a greatly robust support which is easy to assemble and remove from the rear vehicle bumper, support formed by the combination of two sets of parts, one defined by two parts between which a clamp is formed and which extends in a transverse wing, perpendicularly to which two side profiles are assembled which are secured to this perpendicular extension by means of a through screw, with the particularity that these side elements have a recess in one of their corners, specifically the upper one, and in this recess they have an opening for attaching pivots arranged for that purpose on the structure forming the luggage carrier, a structure having the particularity of being telescopic so that it can be conveniently retracted and extended, and having means forming a direct connection, in the retracted position, between a rear-assembled support carrying the rear lights and additional license plate apart from the vehicle license plate, and the vehicle itself without having to bring out supplementary conduits in order to provide the power supply to the rear lights and the license plate lights when the luggage carrier is assembled on the rear portion of the vehicle in question, in which case it shall logically have the license plate and lights in its rear portion, since the conventional ones of the vehicle are partly hidden by the support and the luggage that it may carry.

Another novel feature is that the framework having the pivots attaching in the openings of the side elements or parts of the support anchored to the rear vehicle ball swivels and may be placed in different positions, and the coupling elements are complemented with stiffening brackets which on the one hand provide greater strength to the coupling element and further define an immobilising means for said coupling element.

Another novel feature is that the longitudinal beams have transverse bolts for locking the telescopic parts thereof with one another.

These and other features, as well as the advantages derived from them, shall be discussed throughout the present description.

### DESCRIPTION OF THE DRAWINGS

In order to complement the description being made and for the object of aiding towards a better understanding of the features of the invention according to a preferred practical embodiment thereof, a set of drawings is attached as an integral part of said description, in which the following is shown in an illustrative and non-limiting manner:

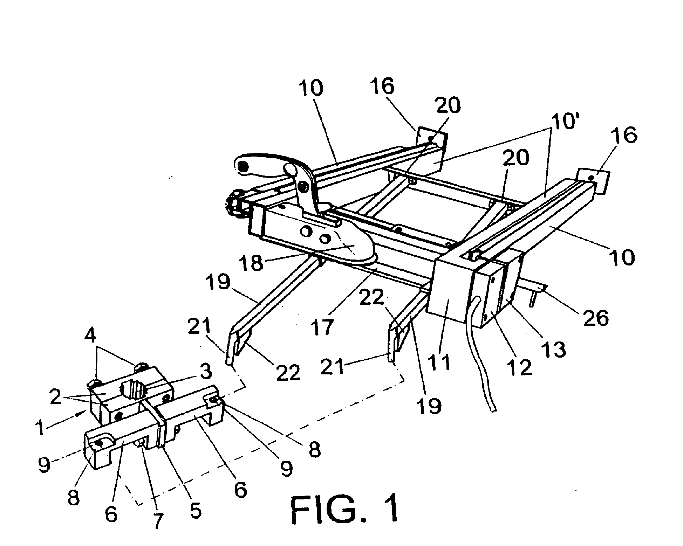

Figure 1 shows a perspective view of the luggage carrier of the invention, showing the anchoring support for coupling to the rear vehicle ball and the structure forming the luggage carrier itself.

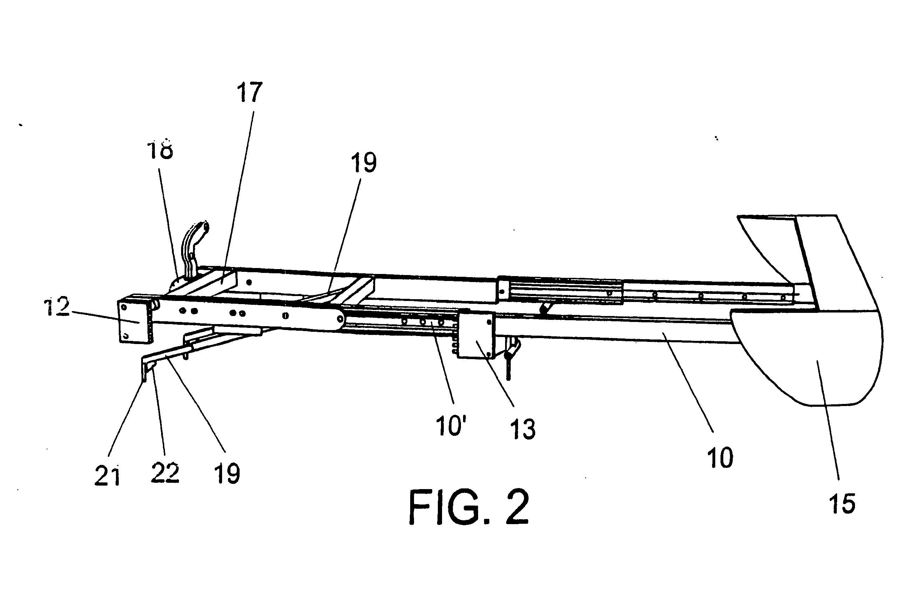

Figure 2 shows a perspective view of the luggage carrier in its extended position.
Figure 3 shows a practical application of the luggage carrier arranged on the rear portion of an automotive vehicle and a crate on said luggage carrier.
Figure 4 shows another practical application on another type of vehicle, showing the luggage carrier completely extended in this case in order to open the rear vehicle door.
Figure 5 shows a lower perspective view of the luggage carrier, showing the swivelling movement of the anchoring framework, the bolts of the telescopic longitudinal beam locking sides and anchoring pins for anchoring , for example, a crate arranged on the lugg age carrier.

### PREFERRED EMBODIMENT OF THE INVENTION

In view of the figures described it can be seen how the luggage carrier of the invention comprises first a support (1) intended to be removably fixed on the bar corresponding to the ball of the type assembled on the rear portion of a vehicle in order to tow a caravan, a trailer or the like. This support (1) has a pair of parts (2) between which a passage (3) is defined for the bar of the rear vehicle ball, the fixing being carried out by means of screws (4) fixing the two parts (2) together and pressing the clamp against said bar of the ball. One of these parts (2) has a projecting wing (5) perpendicular to the part and in correspondence with its outer side, on which as many elements (6) are collaterally assembled, the fixing being carried out by means of a transverse screw (7) passing through a wing of these side parts (6) and through said extension or wing (5), the side elements (6) having a recess (8) on their ends and corresponding to the upper corner, in which an opening (9) can be seen the function of which shall be detailed below. The assembly of the support (1) just described is assembled either in a permanent manner or in a removable manner on the bar corresponding to the rear ball of a vehicle, such that the structure constituting the luggage carrier is anchored on that support, said structure comprising longitudinal beams formed by two elements (10) and (10') in a telescopic position such that the inner element (10') of each longitudinal beam has on one of its ends a part (11) integral with a plate (12) complementary to another plate (13) provided for that purpose on the outer element (10)of the telescopic longitudinal beams forming the luggage carrier structure, such that in the retracted position the plates (12) and (13) connect together with a power source from the vehicle in order to supply power to the rear lights (14) assembled on a license plate support (15) arranged on the rear portion of said structure, specifically fixed to the end brackets (16) provided on the longitudinal beams and in particular on the outer elements (10) of said telescopic longitudinal beams, all this as a consequence of needing a support (15) with the corresponding vehicle license plate and signalling lights (14) when the luggage carrier is assembled on the rear portion of a vehicle, these being fed when the elements from plates (12) and (13) are interconnected with one another, all this without having to arrange connections for the power supply to that rear license plate and the rear lights.

Said structure has a front crossbeam (17) on which a conventional device (18) for hitching onto the vehicle ball is fixed, whereas a on the other intermediate crossbeam between the longitudinal beams of the structure a framework (19) has been provided with an articulation (20) to said intermediate crossbar such that the arms forming said framework (19) may be adjusted with a larger or smaller angle regarding the structure formed by the longitudinal beams (10-10'), these arms or framework (19) having coupling elements (21) on their free ends intended for being locked in the openings (9) of the previously described general support (1), the anchoring being secured and reinforced by means of brackets (22)in order to prevent bending of the pivots or coupling elements (21).

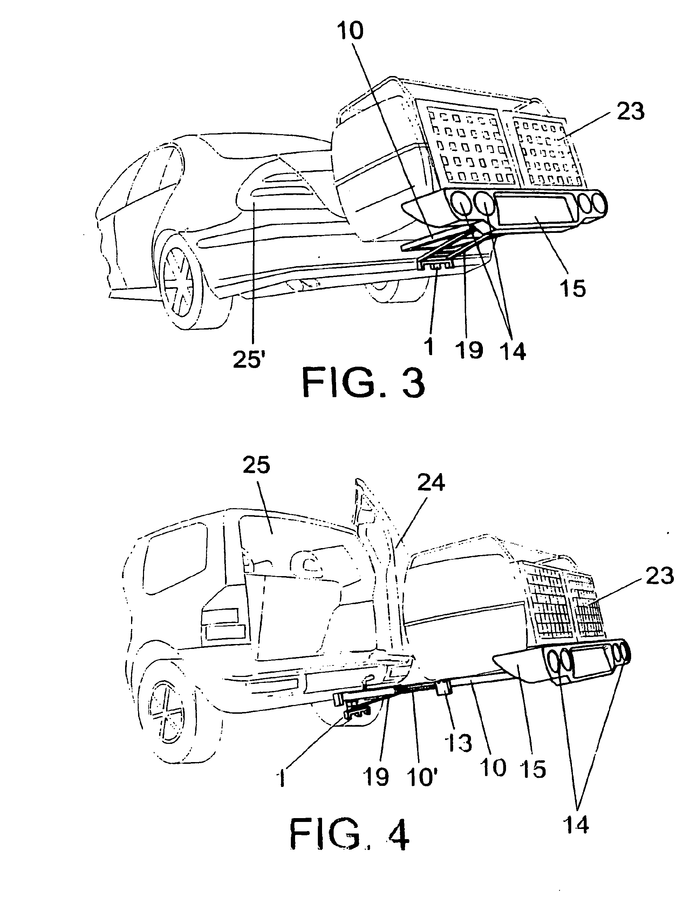

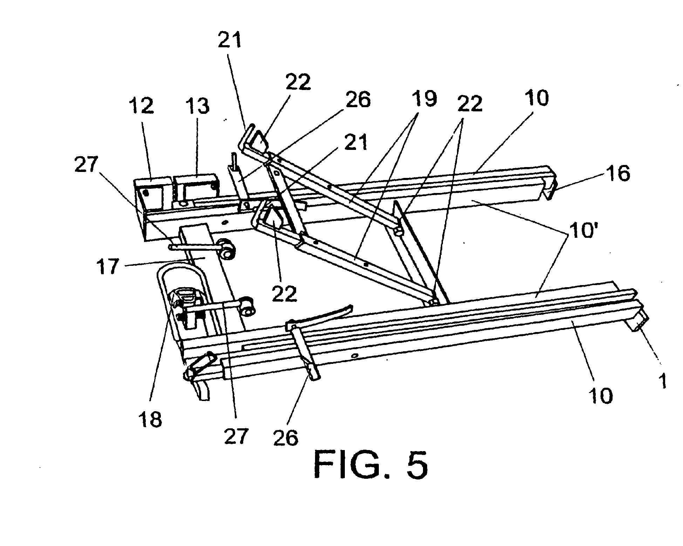

The telescopic system of the longitudinal beams (10) and (10') of the luggage carrier structure allows shifting the luggage, such as a dog crate or basket (23), allowing opening the rear door (24) of a vehicle (25) as shown in Figure 4, corresponding to an off-road vehicle with a back door, since Figure 3 shows a vehicle (25') without a back door, the backward shifting or extension of the longitudinal beams (10-10') thereby not being necessary since the boot door of this vehicle (25') can be opened with the luggage carrier in its retracted position.

As has already been mentioned, with the luggage carrier in its retracted position as represented in Figure 3 or even in Figure 5, the plates (12) and (13) form a direct connection or electrical connection to supply power to the lights and license plate light located on the license plate support (15) arranged on the rear.

The inclination of the framework formed by the arms (19) may be adjusted, that is, it may provide the luggage carrier or structure formed by the longitudinal beams (10) and (10') with more or less height, according to the position said framework (19) occupies, the arms thereof being articulated at (20) on the crossbar arranged between the longitudinal beams of the luggage carrier structure.

In the retracted position, as shown in Figure 4, the longitudinal beams (10) and (10') are locked with one another by means of manually actuated bolts (26) assembled sideways, said bolts being housed in opposite openings in that retracted position of the longitudinal beams (10) and (10').

Likewise, provided on the crossbeam (17) of the structure formed by the longitudinal beams (10) and (10') there are rods or pivots (27) for being housed in openings provided for that purpose in the lower portion of the crate or luggage (23) in order to achieve immobilisation thereof.

The crate or luggage (23) provides that the windows seen thereon, due to their being a case for transporting dogs, are removed and placed through side and end guides, being fixed on the upper portion by means of locks.

## Claims

1. - A rear luggage carrier for vehicles which, being of the type using a support (1) intended to be fixed to a classic rear vehicle towing hitch or bar carrying the ball assembled on vehicles on their rear portion, and having a structure formed by two longitudinal beams (10, 10') with a crossbeam (17) on one of the ends provided with a conventional fixing device (18) for fixing it to said rear vehicle ball , and on the structure of which a framework (19) is assembled with coupling elements (21) for coupling in orifices (9) arranged for that purpose on the support fixed to the rear vehicle hitch, **characterised in that** said support, formed by two parts (2), fixed to one another in the manner of a clamp, has a perpendicular plate (5), to which side parts (6) are assembled by means of a transverse common screw (7) the parts of which are provided on the upper portion of their corners with a recess (8) in which the anchoring opening (9) for the coupling elements (21) of the framework (19) provided on the structure determined by the longitudinal beams is arranged; having been provided that each longitudinal beam is formed by two elements (10,10') telescopically assembled together which can be fixed in their retracted or operating positions by means of transverse bolts (26), whereas the framework (19), formed by arms, is articulated (20) to an intermediate crossbeam of the structure formed by the longitudinal beams.

2. - A rear luggage carrier for vehicles according to claim 1, **characterised in that** the longitudinal beams of each one of the sides have parts or plates (12,13) with connection elements for establishing, in the operating or retracted positions of said telescopic longitudinal beams, the power supply from the vehicle to the corresponding rear lights and license plate light placed on a support (15) assembled on the rear portion or free end corresponding to the longitudinal beams forming the luggage carrier structure.

3. - A rear luggage carrier for vehicles according to claim 1, **characterised in that** the coupling elements (21) arranged on the free ends of the framework articulated between the longitudinal beams of the luggage carrier structure are complemented by stiffening brackets (22) preventing these coupling elements from bending, stiffening the anchoring of the luggage carrier assembly to the support which can be fixed to the rear portion of the vehicle.

## Patentansprüche

1. Ein Gepäckanhänger für Fahrzeuge, wobei dieser von der Art ist, die eine Stütze (1) verwendet, die zur Befestigung auf einer klassischen hinteren Anhängerkupplung oder -deichsel vorgesehen ist, die die Kugel trägt und die an dem hinteren Ende von Fahrzeugen montiert ist, und wobei dieser eine Struktur besitzt, die durch zwei Längsbalken (10, 10') gebildet wird, wobei ein Querbalken (17) an einem der Enden mit einer herkömmlichen Befestigungsvorrichtung (18) zu dessen Befestigung an der besagten hinteren Fahrzeugkugel ausgestattet ist, und auf dessen Struktur ein Rahmen (19) mit Kupplungselementen (21) zur Kupplung an Öffnungen (9) montiert ist, die zu diesem Zweck auf der an der Anhängerkupplung befestigten Stütze angeordnet sind, **dadurch gekennzeichnet, dass** die besagte Stütze, die aus zwei nach Art eine Klammer zusammen befestigten Bauteilen (2) gebildet wird, über eine senkrechte Platte (5) verfügt, an der Seitenbauteile (6) mittels einer querlaufenden gewöhnlichen Schraube (7) befestigt sind, deren Bauteile an dem oberen Teil ihrer Ecken mit einer Aussparung (8) ausgestattet sind, in der die Ankeröffnung (9) für die Kupplungselemente (21) des Rahmens (19) angeordnet ist, die auf der von den Längsbalken bestimmten Struktur vorgesehenen sind; wobei vorgesehen wurde, dass jeder Längsbalken mit zwei Elementen (10, 10') gebildet wird, die teleskopisch miteinander montiert sind und die in deren eingefahrener Stellung oder Arbeitsstellung mittels querlaufender Bolzen (26) befestigt werden können, während der mittels Armen gebildete Rahmen (19) über ein Gelenk (20) mit einem Zwischenquerbalken der aus den Längsbalken gebildeten Struktur verbunden ist.

2. Ein Gepäckanhänger für Fahrzeuge nach Anspruch 1, **dadurch gekennzeichnet, dass** die Längsbalken jeder einzelnen Seite über Bauteile oder Platten (12, 13) mit Verbindungselementen verfügen, um in der eingefahrenen Stellung oder Arbeitsstellung der besagten teleskopischen Längsbalken die Energieversorgung von dem Fahrzeug zu den entsprechenden Rücklichtern und zur Kennzeichenbeleuchtung zur Verfügung zu stellen, die auf einer Stütze (15) positioniert sind, der auf dem hinteren Teil oder freiem Ende entsprechend der die Struktur des Gepäckanhängers bildenden Längsbalken montiert ist,

3. Ein Gepäckanhänger für Fahrzeuge nach Anspruch 1, **dadurch gekennzeichnet, dass** die Kupplungselemente (21), die auf den freien Enden des Rahmens angeordnet und zwischen den Längsbalken der Gepäckanhängerstruktur mit Gelenken verbunden sind, durch Versteifungsklammem (22) ergänzt werden, die eine Krümmung dieser Kupplungselemente verhindern und die Verankerung der Gepäckanhängerbaugruppe mit der Stütze versteifen, die auf dem hinteren Teil des Fahrzeugs befestigt werden kann.

## Revendications

1. Un porte-bagages arrière pour véhicules qui, étant du type utilisant un support (1) destiné à être fixé à une attache de remorquage arrière traditionnelle pour véhicules ou à une barre portant la boule montée sur la zone arrière des véhicules, et possédant une structure formée de deux poutres longitudinales (10, 10') avec une traverse (17) sur l'une des extrémités pourvue d'un dispositif de fixation traditionnel (18) pour sa fixation sur ladite boule arrière de véhicule, et sur la structure duquel un châssis (19) est monté avec des éléments de couplage (21) pour un couplage dans des orifices (9) disposés à cette fin sur le support fixé à l'attache de remorquage arrière pour véhicules, **caractérisé en ce que** ledit support, formé de deux parties (2) fixées l'une à l'autre à la manière d'un élément de serrage, possède une plaque perpendiculaire (5) à laquelle des parties latérales (6) sont assemblées au moyen d'une vis transversale ordinaire (7) dont les parties sont pourvues sur la zone supérieure de leurs coins d'une cavité (8) dans laquelle l'ouverture d'encastrement (9) pour les éléments de couplage (21) du châssis (19) constitué sur la structure déterminée par les poutres longitudinales est disposée ; il a été prévu que chaque poutre longitudinale soit formée de deux éléments (10, 10') assemblés ensemble télescopiquement qui peuvent être fixés dans leurs positions de rétractation ou de fonctionnement au moyen de boulons transversaux (26), alors que le châssis (19), formé de bras, est articulé (20) à une traverse intermédiaire de la structure formée par les poutres longitudinales.

2. Un porte-bagages arrière pour véhicules selon la revendication 1, **caractérisé en ce que** les poutres longitudinales de chacun des côtés possèdent des parties ou plaques (12, 13) avec des éléments de connexion pour installer, dans les positions de fonctionnement ou de rétractation desdites poutres longitudinales télescopiques, l'alimentation en énergie à partir du véhicule vers les éclairages arrière et l'éclairage de la plaque d'immatriculation correspondants placés sur un support (15) monté sur la zone arrière ou l'extrémité libre correspondant aux poutres longitudinales formant la structure du porte-bagages.

3. Un porte-bagages arrière pour véhicules selon la revendication 1, **caractérisé en ce que** les éléments de couplage (21) disposés sur les extrémités libres du châssis articulé entre les poutres longitudinales de la structure du porte-bagages sont complétés par des ferrures-supports de raidissage (22) empêchant ces éléments de couplage de plier, raidissant l'encastrement de l'assemblage du porte-bagages dans le support qui peut être fixé à la zone arrière du véhicule.
